# EUROPEAN PATENT APPLICATION

(11) **EP 2 224 626 A1**
(43) Date of publication of application: **01.09.2010**
(21) Application number: 09180336.1
(22) Date of filing: 22.12.2009
(51) Int. Cl.: H04B 10/17

(54) **Optical fiber transmission system and method**

(30) Priority: 27.02.2009 JP 2009046696
(71) Applicant: Fujitsu Limited, Kawasaki-shi, Kanagawa 211-8588 (JP)
(72) Inventor: Watanabe, Shigeki, Kanagawa 211-8588 (JP); Futami, Fumio, Kanagawa 211-8588 (JP); Okabe, Ryou, Kanagawa 211-8588 (JP)
(74) Representative: HOFFMANN EITLE

(57) **Abstract**

An optical fiber transmission system including: a first transmission-line optical fiber (103 (#1)) to input first wavelength signal light (106 (#1)) output from a transmitter (101), and to change a waveform of the signal light (106 (#1)); an optical coupler (104) to combine the first wavelength signal light (106 (#1)) that has been propagated through the first transmission-line optical fiber (103 (#1)) with second wavelength pumping light (107); an optical limiter (105) to input coupled light output from the optical coupler (104), saturating a gain as power of the coupled light increases using a nonlinear optical medium, thereby suppressing an optical noise component included in the coupled light, and to output signal light (106 (#1)) including the first wavelength optical component (106 (#1)) obtained from the nonlinear optical medium; and a second transmission-line optical fiber (103 (#2)) to input to a receiver (102) after signal light (106 (#1)) output from the optical limiter (105) is input and a waveform change by the first transmission-line optical fiber (103 (#1)) in the signal light (106 (#1)) is compensated for.

## Description

### FIELD

The technology to be disclosed relates to a technique of suppressing optical noise of signal light waveform used in an optical fiber transmission without converting an optical signal into an electric signal.

### BACKGROUND

In an optical fiber transmission system, the limits of a transmission capacity and a transmission distance depend on the optical S/N ratio (optical signal-to-noise ratio), a Q value, and the waveform distortion and the phase distortion of an optical signal. The waveform distortion and the phase distortion of an optical signal largely depend on the chromatic dispersion (including high-order dispersion) of transmission-line optical fiber, a nonlinear optical effect, etc. An optical S/N ratio and a Q value depend on the ASE (amplified spontaneous emission) noise generated in an optical amplifier for compensating the loss of optical fiber, the noise characteristic in a transmitter or a receiver, etc.

The following compensating technology has been developed against the waveform distortion of an optical signal by the chromatic dispersion.
- transmission line in which normal dispersion fiber and anomalous dispersion fiber are alternately arranged so that the average dispersion can be substantially zero.
- A method of using a chromatic dispersion compensator for dispersion compensation fiber etc.
- A compensating method by electric signal processing after converting a received optical signal into an electric signal.

Up to now, a WDM (wavelength division multiplexing) optical fiber transmission system has been developed to perform an long distance data transmission in 10 Gb/s while compensating for the loss of a transmission line using an optical amplifier.

Furthermore, a higher-speed and long-distance data transmission (for example, 40 b/s, 100 Gb/s) has been developed, and a system for realizing an optical network has been developed.

However, although high-precision dispersion compensation and distortion compensation, and a high-quality optical amplifier are combined, the degradation of an optical S/N ratio, a Q value, etc. by the ASE noise etc. generated by an optical amplifier cannot be compensated for, thereby limiting the transmission distance. Therefore, to realize a long-distance optical fiber transmission of a high-speed signal, the realization of the technology of suppressing accumulated noise is required together with the technology of shaping a distorted optical waveform and the technology of correcting a phase distortion. As a technique of shaping a waveform of an optical signal, an optical waveform shaping device etc. with an optical limiter amplifier using a nonlinear optical medium is well known.

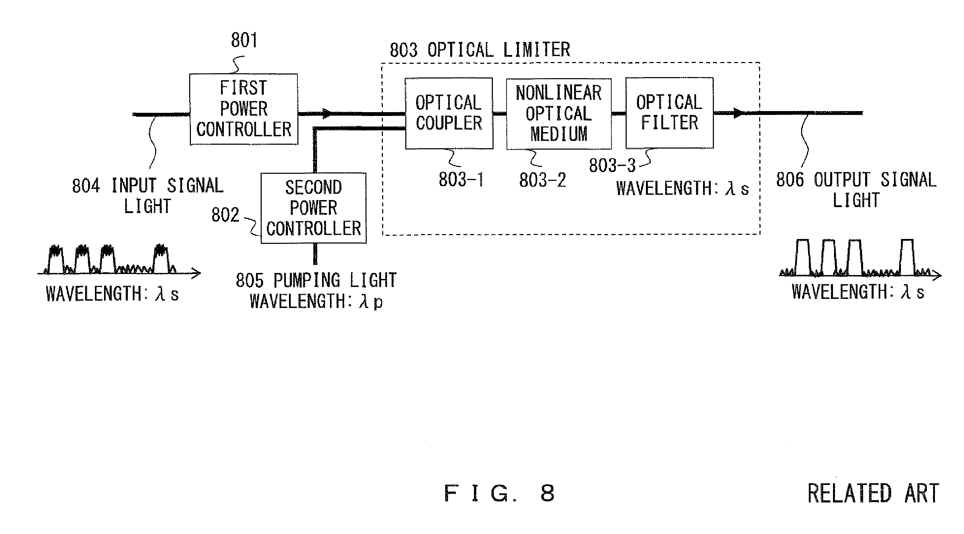

FIG. 8 illustrates the conventional technology of a waveform shaping device using an optical limiter 803.

The power of input signal light 804 and pumping light 805 is controlled by a first power controller 801 and a second power controller 802. An optical coupler 803-1 combines the input signal light 804 input from the first power controller 801 with the pumping light 805 input from the second power controller 802, and outputs coupled light obtained as a result of the combination.

A nonlinear optical medium 803-2 controls the power of the input signal light 804 so that the gain by the pumping light 805 can be saturated in the coupled light input from the optical coupler 803-1.

Since the optical component corresponding to the pumping light 805 is output together with the optical component corresponding to the input signal light 804 from the nonlinear optical medium 803-2, the optical component corresponding to the pumping light 805 is removed by the optical filter 803-3. As a result, only the optical component corresponding to the input signal light 804 is output as output signal light 806 from the optical filter 803-3.

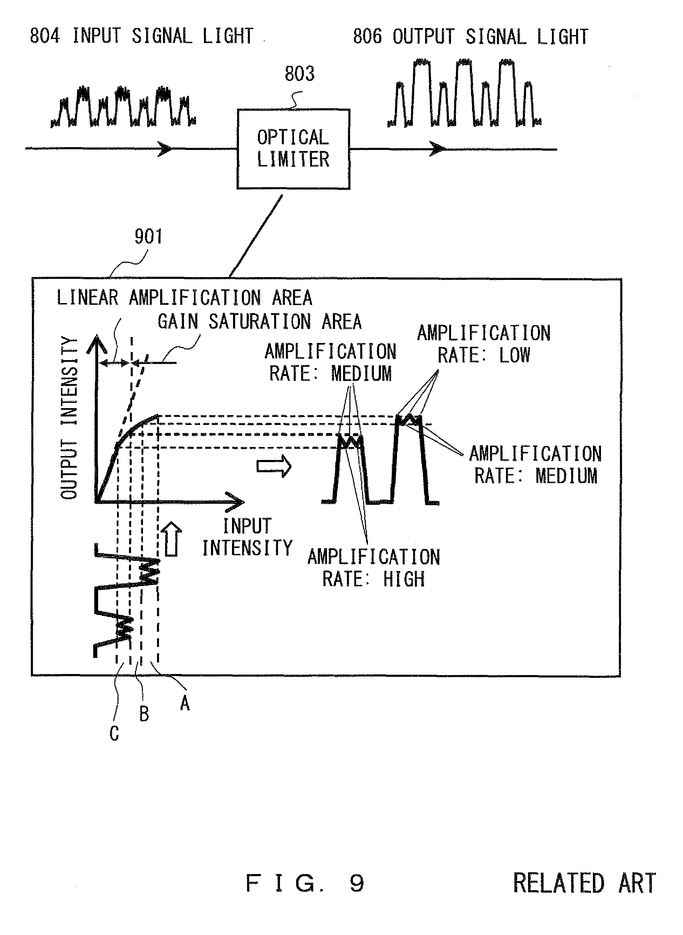

FIG. 9 is an explanatory view of the operation of the optical limiter 803. An input/output characteristic 901 illustrated in FIG. 9 indicates the relationship between the input intensity of the signal light input to the nonlinear optical medium 803-2 and the output intensity of the signal light output from the nonlinear optical medium 803-2 when the pumping light 805 input to the nonlinear optical medium 803-2 illustrated in FIG. 8 has a predetermined level of optical power. In the area C having low input intensity, the relationship between the input intensity and the output intensity is linear, and the nonlinear optical medium 803-2 maintains a high amplification rate (gain). However, when the area B in which the input intensity gradually increases is entered and the power cannot be regarded as sufficiently low relative to the power of the pumping light 805, the amount of energy conversion into the signal light input from the pumping light 805 gradually becomes short. Therefore, the output power starts being saturated, and the amplification rate falls to the medium level. Furthermore, when the area A indicating high input intensity is entered, the amount of energy conversion to the signal light input from the pumping light 805 is exhausted and the output power is saturated, thereby indicating a small value of the amplification rate. Using the gain saturation area indicated by "A" of the input/output characteristic 901, the input signal light 804 suppresses the noise component at the level of the logical value "1", and can obtain the output signal light 806 in which the waveform of the input signal light 804 is shaped.

Listed below are the documents of the disclosed prior art relating to the technology to be disclosed.
[Patent Document 1] Japanese Laid-open Patent Publication No. 2000-75330
[Patent Document 2] Japanese Laid-open Patent Publication No. 2006-184851
[Patent Document 3] Japanese Laid-open Patent Publication No. 2007-264319

As described above, in the prior art technology, it has been difficult to improve the optical S/N ratio and the Q value without changing the waveform or the spectrum of signal light. On the other hand, in the waveform shaping device using an optical limiter illustrated in FIG. 8, the noise component in which the input signal light 804 reached the level of the logical value "1" can be sufficiently suppressed.

However, relating to the noise component in which the input signal light 804 reaches the level of the logical value "0", the optical limiter 803 operates in the linear amplification area indicated by "C" of the input/output characteristic 901 illustrated in FIG. 9. As a result, the amplification rates to the input signal light 804 becomes high, and it is difficult to suppress the noise component.

### SUMMARY

The problem to be solved by the technology of the present invention to be disclosed is to suppress the optical intensity noise in the optical fiber transmission system.

The technology to be disclosed is realized as an optical fiber transmission system for transmitting signal light between a transmitter and a receiver, and has the following configuration.

The first transmission-line optical fiber inputs first wavelength signal light output from the transmitter, and changes the waveform of the signal light.

An optical coupler combines the first wavelength signal light that has been propagated through the first transmission-line optical fiber with second wavelength pumping light.

The optical limiter inputs the coupled light output from the optical coupler, and saturates the gain as the power of the coupled light increases using the nonlinear optical medium, thereby suppressing the optical noise component included in the coupled light, and outputting the signal light including the first wavelength optical component obtained from the nonlinear optical medium.

Second transmission-line optical fiber is input to the receiver after the signal light output from the optical limiter is input and the waveform change by the first transmission-line optical fiber in the signal light is compensated for.

### BRIEF DESCRIPTION OF DRAWINGS

FIG. 1 illustrates the configuration of a first embodiment of the optical fiber transmission system;
FIG. 2 illustrates the configuration of a second embodiment of the optical fiber transmission system;
FIG. 3 illustrates the configuration of a third embodiment of the optical fiber transmission system;
FIG. 4 illustrates the configuration of a fourth embodiment of the optical fiber transmission system;
FIG. 5 illustrates the configuration of a fifth embodiment of the optical fiber transmission system;
FIG. 6 illustrates the configuration of a sixth embodiment of the optical fiber transmission system; and
FIG. 7A illustrates the waveform indicating the suppressive effect of the optical noise.
FIG. 7B illustrates the waveform indicating the suppressive effect of the optical noise.
FIG. 8 illustrates the configuration of the conventional technology of the waveform shaping device;
FIG. 9 is an explanatory view of the operation of the optical limiter;

### DESCRIPTION OF EMBODIMENTS

The embodiments are described below in detail.

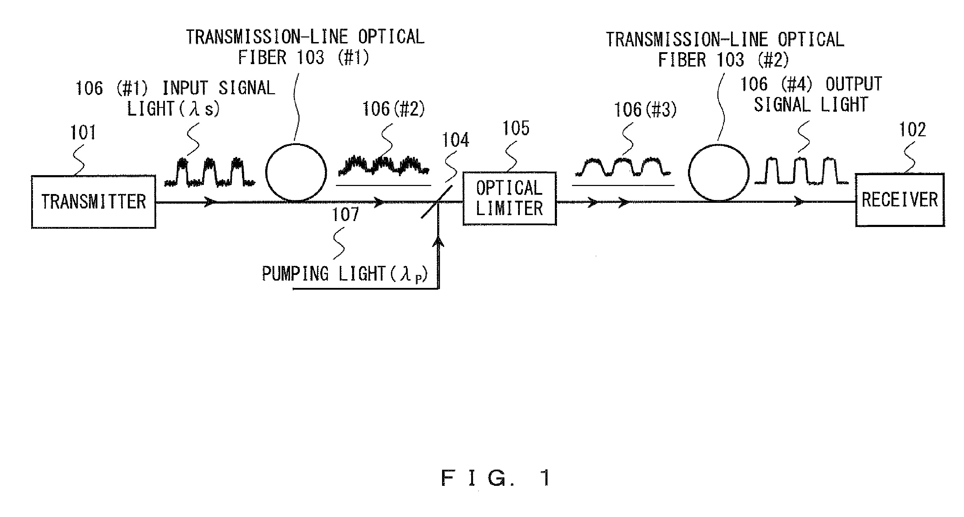

FIG. 1 illustrates the configuration of a first embodiment of the optical fiber transmission system.

A signal light 106 (#1) having a wavelength λs is changed into signal light 106 (#2) by the propagation in a transmission-line optical fiber 103 (#1) so that the duty ratio of a time waveform can be enlarged.

Then, the signal light 106 (#2) is wavelength multiplexed by an optical coupler 104 with pumping light 107 having a wavelength λp different from the wavelength λs of the signal light 106 (#2), and resultant coupled light is input to an optical limiter 105. The pumping light 107 can also be input to the optical coupler 104 after being controlled in a specific polarization status by a polarization controller etc.

After the optical noise whose fluctuation is more largely suppressed when the optical intensity is higher, , the signal light 106 (#2) is output as signal light 106 (#3) by the optical limiter 105.

The signal light 106 (#3) is propagated through the transmission-line optical fiber 103 (#2) having the characteristic of compensating for a part or the most part of a waveform change generated in the transmission-line optical fiber 103 (#1), and thereafter, the signal light 106 (#3) is input to a receiver 102 as a signal light 106 (#4) to be received by the receiver 102.

An example of a combination of the transmission-line optical fiber 103 (#1) and the transmission-line optical fiber 103 (#2) can be a combination of optical fibers etc. having inverse signs of chromatic dispersion, a combination of a transmission-line fiber and a dispersion compensation fiber, a combination of a transmission-line fiber and a dispersion compensator, etc.

The optical limiter 105 can have the same configuration as the configuration described above and illustrated in FIG. 8. To be more practical, the optical limiter 105 can be realized, for example, by an optical parametric amplifier using a third-order nonlinear optical effect and a second-order nonlinear optical effect and a Raman amplifier. The principle of the operation of the optical limiter 105 is the same as that described above and illustrated in FIG. 9.

An optical band filter for extracting a wavelength component (λs) of the signal light 106 (#1) from the signal light 106 (#3) can be provided at the output terminal of the optical limiter 105. Otherwise, a band cutoff filter for cutting off the wavelength component (pumping light 107 etc.) other than the wavelength component (λs) of the signal light 106 (#1) can also be provided. Otherwise, a wavelength division multiplexing (WDM) optical coupler etc. can be provided.

With the configuration according to the first embodiment illustrated in FIG. 1, since the duty ratio of a time waveform is enlarged in the signal light 106 (#2) input to the optical limiter 105, the rate of the "0" level component becomes small. Therefore, by inputting the signal light 106 (#2) with the pumping light 107 to the optical limiter 105, the optical limiter 105 can be operated around the gain saturation area indicated by "A" or "B" of the input/output characteristic 901 illustrated in FIG. 9. As a result, as described above with reference to FIG. 9, the amplification rate in the optical limiter 105 is suppressed, thereby effectively suppressing the optical noise in the signal light 106 (#2) in the period at the level other than "1". By the transmission-line optical fiber 103 (#2), the duty ratio changed in the signal light 106 (#3) is returned to the duty ratio of the original signal light 106 (#1), thereby obtaining the signal light 106 (#4) waveform shaped so that the optical noise can be effectively suppressed also in the period at the level other than "1".

The configuration according to the first embodiment illustrated in FIG. 1 also has the characteristic that signal light spectrum hardly changes in the process of waveform shaping the signal light 106 (#1) into the signal light 106 (#4).

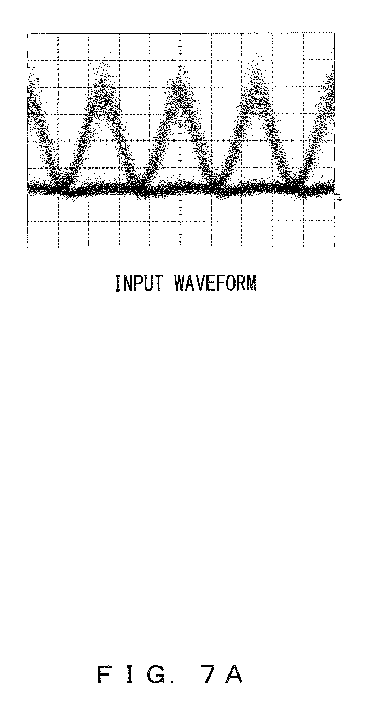

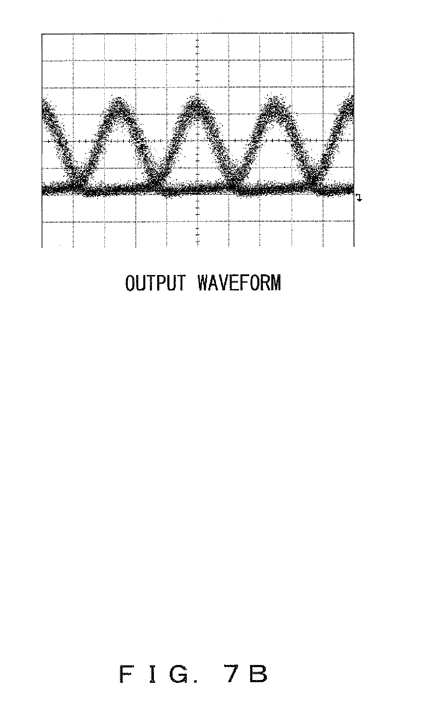

FIG. 7A is an example of a waveform of the signal light 106 (#1) illustrated in FIG. 8. FIG. 7B is an example of a waveform of the signal light 106 (#4) illustrated in FIG. 1. Thus, it is understood that the optical noise component superposed in the input waveform illustrated in FIG. 7A can be appropriately suppressed in the output waveform illustrated in FIG. 7B

With the configuration according to the first embodiment illustrated in FIG. 1, the point where a pulse width is enlarged is selected by the chromatic dispersing operation of the transmission-line optical fiber 103 (#1), and the optical limiter 105 operates on the signal light 106 (#2). However, it is not necessary for the pulse width to uniformly expand.

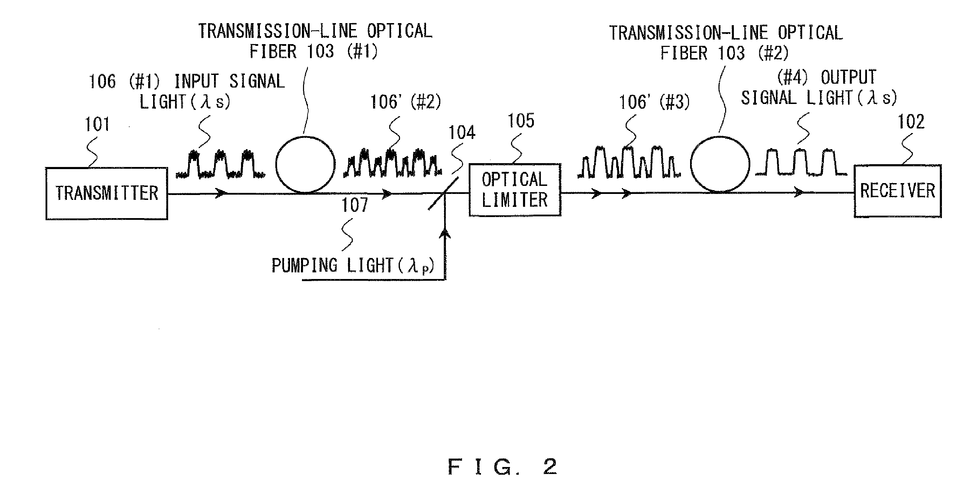

FIG. 2 illustrates the configuration according to the second embodiment of the optical fiber transmission system with the consideration taken into account.

The configuration illustrated in FIG. 2 is basically the same as the configuration according to the first embodiment illustrated in FIG. 1, but also illustrates the case in which the signal light output from the transmission-line optical fiber 103 (#1) is the signal light 106' (#2) having the characteristic different from the signal light 106 (#2) illustrated in FIG. 1.

In FIG. 2, a new waveform structure is generated in the pulses of the original signal light 106 (#1) in the signal light 106' (#2) by the waveform change by the chromatic dispersion of the transmission-line optical fiber 103 (#1). In this case, the signal light 106 (#2) whose optical intensity in the time slot of the original signal light 106 (#1) is changed so that the time rate of the component of zero can be the lowest possible is output from the transmission-line optical fiber 103 (#1). As a signal light waveform input to the optical limiter 105, a leveled pulse peak or uniform peak intensity can suppress the optical noise the most effectively, but the any signal light waveform changed so that the rate of the "0" level component can be the lowest possible can enhance the noise suppression effect by the optical limiter 105 as compared with the signal light waveform that is not waveform changed.

Therefore, although the transmission-line optical fiber 103 (#1) has the characteristic of outputting the signal light 106' (#2) illustrated in FIG. 2, the optical noise in the signal light 106 (#1) can be effectively suppressed.

In the above-mentioned first and second embodiments, the amplitude noise can be relatively concentrated around the peak of the pulse. Accordingly, the optical S/N ratio and the Q value can be improved under the limiter operation conditions less strict than the noise suppression with the conventional optical limiter.

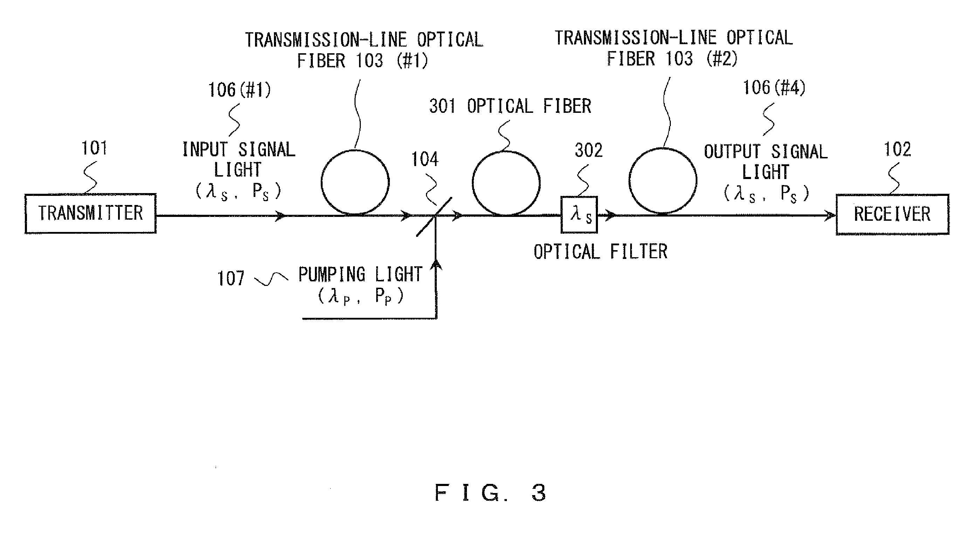

FIG. 3 illustrates the configuration according to the third embodiment of the optical fiber transmission system.

In FIG. 3, the unit for performing the same process as in the case according to the first embodiment illustrated in FIG. 1 is assigned the same reference numeral.

The configuration illustrated in FIG. 3 is different from the configuration illustrated in FIG. 1 in that the optical limiter 105 illustrated in FIG. 1 is replaced with an optical fiber 301 and an optical filter 302 illustrated in FIG. 3. The third embodiment realizes the function of the optical limiter by the parametric amplification effect in the optical fiber 301. The signal light 106 (#1) having the wavelength λs and the power Ps during the transmission from a transmitter 101 is wavelength multiplexed by the optical coupler 104 with the pumping light 107 having the wavelength λp different from the wavelength λs, and the power Pp after the propagation in the transmission-line optical fiber 103 (#1). The resultant coupled light is input to the optical fiber 301. The pumping light 107 can also be input to the optical coupler 104 after control into a specific polarization status using a polarization controller etc.

The optical parametric amplification is performed on the signal light 106 (#2) in the optical fiber 301 by the pumping light 107.

The signal light (wavelength λs) output from the optical fiber 301 is extracted by the optical filter 302 for extracting the wavelength component of the signal light arranged at the output side, and then propagated in the transmission-line optical fiber 103 (#2), and input to the receiver 102 as the signal light 106 (#4). The optical filter 302 can be an optical band filter for extracting only the component of the signal light 106 (#1), a band cutoff filter for cutting off the wavelength component (pumping light 107 etc.) other than light, a wavelength division multiplexing (WDM) optical coupler etc..

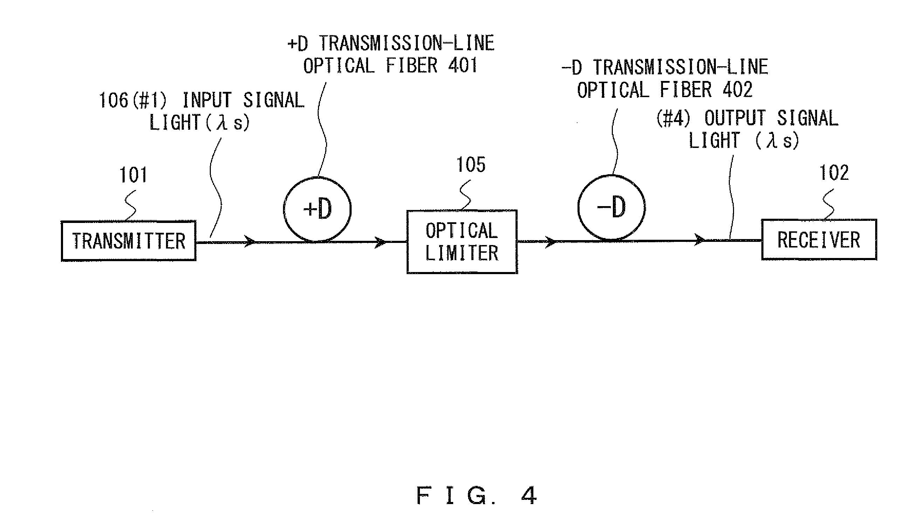

FIG. 4 illustrates the configuration according to the fourth embodiment of the optical fiber transmission system. In FIG. 4, the unit for performing the same process as in the case according to the first embodiment illustrated in FIG. 1 is assigned the same reference numeral.

In the optical fiber transmission system, since the total sum of the chromatic dispersion of a transmission-line fiber is set as substantially zero, the configuration is performed by combining optical fibers having inverse signs in many cases. Since the wavelength of such a dispersion managed (DM) transmission line is changed in the line, an effect similar to that in the case according to the first through fourth embodiments can be realized.

FIG. 4 illustrates the configuration in which the optical limiter 105 is arranged at the output terminal of a +D transmission-line optical fiber 401 arranged as the first component in the DM transmission line realized by the +D transmission-line optical fiber 401 and a -D transmission-line optical fiber 402. The -D transmission-line optical fiber can be a first component, and the +D transmission-line optical fiber can be a second component.

Thus, the fourth embodiment can obtain an effect similar to that in the case according to the first embodiment.

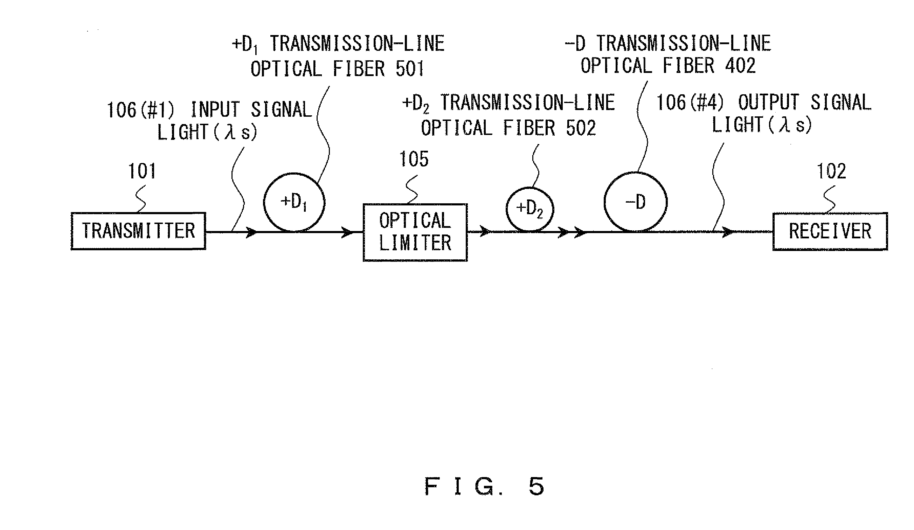

FIG. 5 illustrates the configuration according to the fifth embodiment of the optical fiber transmission system. In FIG. 5, the unit for performing the same process as in the case according to the fourth embodiment illustrated in FIG. 4 is assigned the same reference numeral.

With the configuration according to the fourth embodiment illustrated in FIG. 4, the optical limiter 105 is arranged between the +D transmission-line optical fiber 401 and the -D transmission-line optical fiber 402 having opposite signs in the DM transmission line. Depending on the distortion of a waveform, the optical limiter 105 can be provided in the fiber 401 or 402.

The configuration example illustrated in FIG. 5 the +D transmission-line optical fiber 401 in FIG. 4 is divided into a +D₁ transmission-line optical fiber 501 and a +D₂ transmission-line optical fiber 502 (D₁ + D₂ = D) , and the optical limiter 105 is arranged at the dividing position (where the total sum of the dispersion changes into +D₁). The +D₂ transmission-line optical fiber 502 as the second half portion of the +D fiber is arranged at the output terminal of the optical limiter 105.

It is also possible that the -D transmission-line optical fiber 402 in FIG. 4 is divided and the optical limiter 105 is arranged at the dividing position.

With the above-mentioned configuration according to the fifth embodiment, a flexible optical fiber transmission system can be configured.

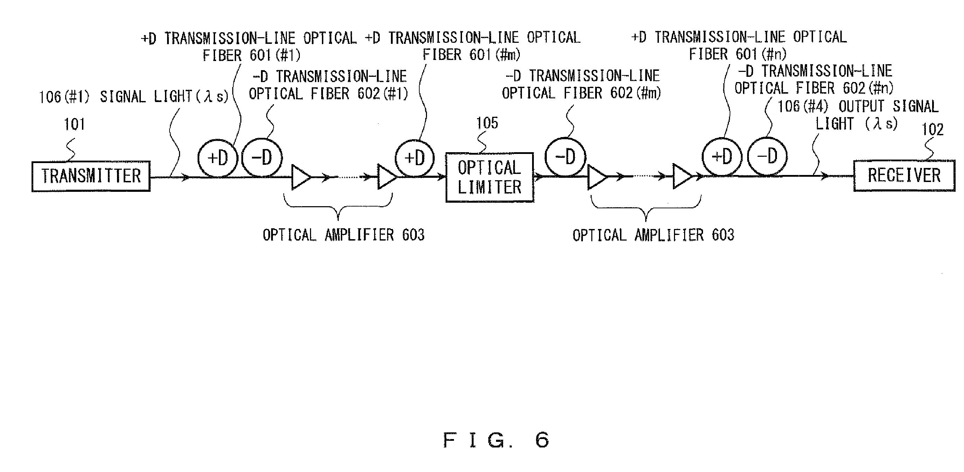

FIG. 6 illustrates the configuration according to the sixth embodiment of the optical fiber transmission system.

In FIG. 6, the unit for performing the same process as in the case according to the fourth embodiment illustrated in FIG. 4 is assigned the same reference numeral.

In FIG. 6, a DM transmission line including a plurality of +D transmission-line optical fibers 601 (#1, ..., #m, ... #n) and -D transmission-line optical fibers 602 (#1, ..., #m, ... #n) are amplification repeated by a plurality of optical amplifiers 603. The optical limiter 105 is inserted into the DM transmission line as in the case according to the fifth embodiment.

With the configuration according to the six embodiment above, a more flexible optical fiber transmission system can be configured.

In the first through sixth embodiments above, optical fiber (including the optical fiber 301 in FIG. 3) is used as a nonlinear optical medium (equivalent to the optical amplifier 603-2 in FIG. 6) included in the optical limiter 105. The length of the optical fiber used as a nonlinear optical medium is determined so that a desired optical parametric amplification efficiency can be acquired or the optimum optical limiter effect can be obtained. In addition, to reserve the band of the optical parametric amplification in a sufficient range, the phase matching can be performed so that the wavelength (λp) of the pumping light 107 can match or substantially match the zero dispersion wavelength (λ0) of the optical fiber. It is also preferable that the wavelength of the pumping light 107 is set at the long wavelength side longer than the zero dispersion wavelength of the optical fiber, and the phase matching is designed using a nonlinear phase shift.

As the optical fiber, for example, a high nonlinear fiber (HNLF) with an enhanced nonlinear optical effect is effective. For the above-mentioned optical fiber, a configuration in which the core is doped with germanium, bismuth, etc. to enhance the nonlinear refraction index, a configuration in which a mode field is reduced to enhance the optical power density, a configuration in which chalcogenide glass is used, a configuration in which a photonic crystal fiber structure is used, etc. can be adopted.

As another nonlinear optical medium, a semiconductor optical amplifier of a quantum well structure and a quantum dot structure, a silicon photonics wave guide, etc. can be used. Furthermore, a device for generating a second-order nonlinear optical effect such as three wave mixing etc. can be used as a nonlinear optical medium. For example, a LiNbO₃ waveguide (PPLN) etc. can be used.

As the pumping light 107, CW (continuous) light and an optical pulse can be used. When the pumping light 107 is CW light, it is not necessary to perform timing control on the optical signal transmitted by the signal light 106 (#1), thereby realizing an optical signal processing device with a simple configuration. However, the generation efficiency of a nonlinear optical effect depends on the peak power of the pumping light 107. Therefore, for example, when optical parametric amplification by optical fiber is used, the sufficiently amplified pumping light 107 can be input to the optical fiber to reserve a sufficient gain. In this case, if stimulated Brillouin scattering (SBS) occurs, the input pumping light 107 is reflected, and the generation of the optical parametric amplification is limited. The SBS can be suppressed using the method of providing a temperature distribution in the longitudinal direction of the optical fiber, the method of enlarging the spectrum of pumping light, etc. The enlargement of the spectrum is realized by, for example, the method of providing signal light with phase modulation and frequency modulation at a frequency sufficiently lower than a signal. When the pumping light is an optical pulse, the peak power can be enhanced relatively easily, thereby realizing a high gain. However, with the configuration, it is necessary to combine the timing of the optical signal in the signal light 106 (#1) and the optical pulse of the pumping light 107, thereby requiring a timing regeneration firmware etc.

The technology disclosed above can be applied to an optical modulation signal not only by intensity modulation but also by optical phase modulation using an NRZ and RZ pulse, optical frequency modulation, etc. The technology can also be applied to multiple signal light by wavelength multiplexing in the above-mentioned optical modulation system, time division multiplexing, etc. and multivalue phase modulation signal light etc.

The technology to be disclosed can be used for a long-distance and large-capacity optical fiber transmission system by using optical processing for improving the quality (especially, an optical S/N ratio and a Q value) of an optical signal degraded by the noise added by, for example, an optical fiber transmission.

According to the technology to be disclosed, a larger system margin can be read by improving the optical S/N ratio and the Q value of signal light.

The technology to be disclosed can also realize a high-performance optical fiber transmission system with the optical intensity noise of an optical signal suppressed. Thus, the optical S/N ratio and the Q value of an optical signal can be improved, and a necessary request for a high-speed optical transmission system, for example, the conditions for high-precision dispersion compensation and the conditions for error correction in high redundancy can be moderated, thereby realizing higher performance and reduced cost of an optical network.

The technology to be disclosed also enables an optical transmission with suppressed intensity noise of signal light processed by optical intensity modulation, optical phase modulation, and optical frequency modulation. Furthermore, power consumption in an optical network can be reduced.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification related to a showing of the superiority and inferiority of the invention. Although the embodiments of the present invention have been described in detail, it should be understood that the various changes, substitutions, and alterations could be made hereto without departing from the spirit and scope of the invention.

## Claims

1. An optical fiber transmission system which transmits signal light between a transmitter (101) and a receiver (102) using an optical noise suppressing process, comprising:
a first transmission-line optical fiber (103 (#1)) to input first wavelength signal light (106 (#1)) output from the transmitter (101), and to change a waveform of the signal light (106 (#1));
an optical coupler (104) to combine the first wavelength signal light (106 (#1)) that has been propagated through the first transmission-line optical fiber (103 (#1)) with second wavelength pumping light (107);
an optical limiter (105) to input coupled light output from the optical coupler (104), saturating a gain as power of the coupled light increases using a nonlinear optical medium, thereby suppressing an optical noise component included in the coupled light, and to output signal light including the first wavelength optical component (106 (#1)) obtained from the nonlinear optical medium; and
a second transmission-line optical fiber (103 (#2)) to input to the receiver (102) after signal light output from the optical limiter (105) is input and a waveform change by the first transmission-line optical fiber (103 (#1)) in the signal light is compensated for.

2. The system according to claim 1, wherein
the first and second transmission-line optical fibers (103 (#1), 103 (#2)) have chromatic dispersion with mutually inverse signs to compensate for the waveform change by the chromatic dispersion applied by the first transmission-line optical fiber (103 (#1)) by chromatic dispersion of the second transmission-line optical fiber (103 (#2)).

3. The system according to claim 2, wherein
each of the first and second transmission-line optical fibers (103 (#1), 103 (#2)) is divided into a plurality of partial transmission line sections, and the optical limiter (105) is arranged for one boundary part of the transmission line section.

4. The system according to claim 3, further comprising:
an optical amplifier (603) to compensate for a power loss in each transmission line in the transmission line section.

5. The system according to any of claims 1 through 4, wherein
the nonlinear optical medium in the optical limiter (105) is optical fiber, the optical noise component included in the coupled light is suppressed by saturating the gain as the power of the coupled light increases by an optical parametric amplification effect in the optical fiber.

6. The system according to claim 5, wherein
the nonlinear optical medium is optical fiber in which an average zero dispersion wavelength matches a wavelength of the pumping light in a predetermined error range.

7. The system according to any of claims 1 through 6, wherein
the optical limiter (105) further comprises an optical filter filtering signal light including only the first wavelength optical component from light obtained from the nonlinear optical medium, and outputting the filtered signal light.

8. The system according to any of claims 1 through 7, wherein
the signal light is wavelength-division multiplexed light of a plurality of optical signals.

9. An optical fiber transmitting method for transmitting signal light between a transmitter (101) and a receiver (102) using an optical noise suppressing process, comprising:
a step of changing a waveform of first wavelength signal light (106 (#1)) output from the transmitter (101) by propagating the light through a first transmission-line optical fiber (103 (#1));
a step of combining the first wavelength signal light (106 (#1)) that has been propagated through the first transmission-line optical fiber (103 (#1)) with a second wavelength pumping light (107);
a step of inputting coupled light obtained by the combination, saturating a gain as power of the coupled light increases using a nonlinear optical medium, thereby suppressing an optical noise component included in the coupled light, and outputting signal light including the first wavelength optical component (106 (#1)) obtained from the nonlinear optical medium; and
a step of compensating for a waveform change by the first transmission-line optical fiber (103 (#1)) in the signal light by propagating the output signal light through a second transmission-line optical fiber (103 (#2)), and then inputting the signal light to the receiver (102).
